# EUROPÄISCHE PATENTSCHRIFT

(11) **EP 2 104 941 B1**
(45) Veröffentlichungstag und Bekanntmachung des Hinweises auf die Patenterteilung: **22.02.2017**
(21) Anmeldenummer: 07856111.5
(22) Anmeldetag: 17.12.2007
(51) Int. Cl.: H01G 4/232

(54) **ELEKTRISCHES BAUELEMENT SOWIE AUSSENKONTAKT EINES ELEKTRISCHEN BAUELEMENTS**
ELECTRIC COMPONENT AND EXTERNAL CONTACT OF AN ELECTRIC COMPONENT
COMPOSANT ÉLECTRIQUE ET CONTACT EXTÉRIEUR D'UN COMPOSANT ÉLECTRIQUE

(30) Priorität: 20.12.2006 DE 102006060432
(43) Veröffentlichungstag der Anmeldung: 30.09.2009
(73) Patentinhaber: Epcos AG, 81669 München (DE)
(72) Erfinder: GABLER, Andreas, 8051 Graz (AT); WISCHNAT, Volker, 8530 Deutschlandsberg (AT)
(74) Vertreter: Epping - Hermann - Fischer
(86) Internationale Anmeldenummer: PCT/DE2007/002261
(87) Internationale Veröffentlichungsnummer: WO 2008/074305

(56) Entgegenhaltungen:
- EP-A- 1 321 441
- EP-A- 1 583 107
- WO-A-2005/034255
- GB-A- 1 408 503
- US-A1- 2002 046 861
- US-A1- 2004 090 721

## Beschreibung

Als bisherigen Standes der Technik, Dokument EP1321441A offenbart eine leitfähige Paste, die die Enden von Innenelektroden eines keramischen Vielschichtkondensators beschichtet. Die Paste besteht aus eine Mischung aus einem Glaspulver, Acrylharz, Lösungsmittel und Kupferpulver. Sie wird durch Dippen auf die Elektrodenenden aufgebracht auf 800 bis 850°C geheizt.

Es wird ein elektrisches Bauelement sowie ein elektrischer Außenkontakt mit einem solchen Bauelement beschrieben.

Eine zu lösende Aufgabe besteht darin, eine elektrische Kontaktierungsmöglichkeit für ein elektrisches Bauelement anzugeben, die eine stabile elektrische Kontaktierung des Bauelements mit einem elektrischen Anschluss ermöglicht.

Es wird ein elektrisches Bauelement mit einem Grundkörper angegeben, wobei eine Oberfläche des Grundkörpers, beispielsweise eine Seitenfläche, mit mindestens einer ersten elektrisch leitfähigen Materialschicht versehen ist und die Materialschicht auf ihrer dem Grundkörper abgewandten Oberfläche mit einer weiteren elektrisch leitfähigen Materialschicht versehen ist.

Die erste und die weitere Materialschicht bilden zusammen zumindest einen Teil eines Außenkontakts des elektrischen Bauelements, der entsprechend eine geschlossene, poröse, äußere Oberfläche aufweist. Das elektrische Bauelement kann mehrere solche Außenkontakte aufweisen.

Es ist günstig, wenn zur Herstellung einer ersten Materialschicht zumindest ein Teil des elektrischen Bauelements, der mit der Materialschicht beziehungsweise mit dem Außenkontakt versehen werden soll, galvanisierbar ist. Mit dem Begriff galvanisierbar wird eine Fähigkeit eine Gegenstandes verstanden, mittels elektrochemischer oder chemischer Abscheidung einen Überzug beziehungsweise eine Außenschicht, insbesondere einen metallischen Niederschlag, zu bilden. Es wird bevorzugt, dass zumindest der mit dem Außenkontakt zu versehene Teil des Bauelements einem elektrolytischen Galvanikverfahren unterzogen wird.

Der galvanisierbare Teil des elektrischen Bauelements umfasst insbesondere eine eingebrannte Materialschicht des Bauelements.

Die geschlossene aber poröse Oberfläche des Außenkontakts hat den Vorteil, dass das Bauelement besonders abreißsicher beziehungsweise fest auf eine Montageplatte montiert werden kann oder mit einem anderen elektrischen Anschluss, wie zum Beispiel eine elektrische Zuleitung, kontaktiert werden kann.

Mit dem Begriff porös wird insbesondere die Eigenschaft eines Außenkontakts des Bauelements verstanden, wonach der Außenkontakt Einbuchtungen aufweist, dessen Tiefen jeweils vorzugsweise im Mikrometerbereich liegen.

Eine poröse Oberfläche eines Außenkontakts des elektrischen Bauelements vergrößert seine elektrisch leitfähige Kontaktfläche, wodurch der Widerstand im Grenzbereich zwischen einem externen elektrischen Anschluss und dem Bauelement reduziert wird. Eine Vergrößerung der Oberfläche des Außenkontakts ist auch als erhöhte Oberflächenrauhigkeit des Außenkontakts zu betrachten. Das Bauelement ist vorteilhafterweise ein zur Kontaktierung mit einer Montageplatte besonders geeignetes, leitklebefähiges, oberflächenmontierbares (SMD) Bauelement.

Es können mehrere elektrische, gegebenenfalls gegenpolige, Außenkontakte der beschriebenen Art vorgesehen sein, die je an einer Seitenfläche des Bauelements aufgebracht sind. Dabei kann die erste beziehungsweise innere elektrisch leitfähige Materialschicht des Außenkontakts nicht nur eine Seitenfläche teilweise oder vollständig abdecken; sie kann auch das Bauelement nach Art einer Kappe oder Klammer seitlich umfassen, sodass beispielsweise obere und untere Stirnflächen des Bauelements mit einem Bereich des Außenkontakts versehen sind.

Gemäß einer Ausführungsform des elektrischen Bauelements ist die erste elektrisch leitfähige Materialschicht in den Grundkörper eingebrannt. Sie wird dabei bevorzugt durch Aufbringen auf den Grundkörper des Bauelements einer metallhaltigen Paste, welche durch Einbrand fixiert wird, hergestellt. Das hat den Vorteil, dass die Oberfläche der ersten Materialschicht porös und so groß wie möglich gehalten wird.

Es wird bevorzugt, dass die weitere Materialschicht so dünn wie möglich beziehungsweise mit einer möglichst geringen Dicke ausgeführt ist. Das hat den Vorteil, gleichzeitig die Oberfläche der weiteren Materialschicht beziehungsweise des die erste und die weitere Materialschicht aufweisenden Außenkontakts so groß wie möglich zu halten, da die weitere Materialschicht unmittelbar auf die erste aufgebracht ist. Gemäß einer Ausführungsform des elektrischen Bauelements liegt eine beziehungsweise jede Dicke der ersten Materialschicht im Bereich von 0,5 bis 5 µm.

Gemäß einer Ausführungsform ist die weitere Materialschicht auf die erste Materialschicht galvanisch aufgebracht.

Die Materialschichten können beide jeweils ein Metall enthalten. Es sich als besonders günstig herausgestellt, wenn die erste beziehungsweise die innere Materialschicht des Außenkontakts ein festes, galvanisierbares Material wie zum Beispiel Kupfer aufweist und die weitere beziehungsweise äußere Materialschicht ein leitklebefähiges Material enthält. Dabei wird bevorzugt, dass die äußere Materialschicht eine palladiumhaltige Legierung, insbesondere eine Nickel-Palladium-Legierung enthält. Die palladiumhaltige Legierung hat dabei den Vorteil, besonders gut mit einer Leiterplatte verklebt werden zu können sowie die Eigenschaft, die innere Materialschicht vor Oxidation zu schützen.

Eine äußere Materialschicht enthaltend eine Nickel-Palladium-Legierung weist vorteilhafterweise gegenüber einer reinen Palladiumschicht beziehungsweise einer Palladium-Galvanikschicht eine höhere Duktilität auf. Weitere Vorteile einer äußeren Materialschicht enthaltend eine Nickel-Palladium-Legierung zeigen sich beispielsweise im Vergleich mit einer eingebrannten Silber-Palladiumschicht folgendermaßen:
- Es kann ein Grundkörper direkt aus einer Standardfertigung verwendet werden;
- es wird kein weiterer Metallisierungsschritt sowie kein weiterer Einbrennprozess benötigt;
- die äußere Materialschicht ist sehr dünn, sodass eine bereits vorhandene, innere Oberflächenstruktur im Wesentlichen unverändert bleibt;
- es wird eine Materialeinsparung gegenüber anderen Techniken zum Auftrag von metallhaltigen Schichten erreicht;
- die äußere Schicht kann auf allen galvanisierbaren Bauelementen aufgebracht werden;
- es können komplexe Außenelektrodengeometrien einfach bearbeitet werden.

Der Grundkörper des elektrischen Bauelements umfasst jedes zumindest teilweise galvanisierbare elektronische Bauteil. Der Grundkörper kann eine Kapazität, einen Widerstand wie zum Beispiel einen Varistor oder andere elektrisch schlecht leitende Eigenschaften aufweisen. Beispielsweise könnte es ein keramisches Material wie eine Kondensatorkeramik oder eine Varistorkeramik enthalten.

Unter Verwendung eines eine äußere Galvanikschicht umfassenden Außenkontakts können vorteilhafterweise Bauelemente mit verschiedenen, insbesondere komplexen, Außenkontakten besonders einfach hergestellt werden, für die sonst aufwendigere Prozesse, umfassend sowohl Metallisierung als auch Einbrennen, erst entwickelt und dann ausgeführt werden würden.

Gemäß einer Ausführungsform des elektrischen Bauelements weisen mit einem externen elektrischen Anschluss beziehungsweise einer Leiterplatte kontaktierbare Außenkontakte des Bauelements eine mehrschichtige Struktur auf, bei der zumindest eine erste Materialschicht aus einer ersten Herstellungsart, beispielsweise aus einem Einbrennprozess, und zumindest eine weitere Materialschicht einer zweiten Herstellungsart, beispielsweise aus einer Galvanisierung, zumindest einen Teil der Struktur bilden.

Eine Ausführungsform des elektrischen Bauelements umfasst ein elektrisches Vielschichtbauelement, dessen Grundkörper mehrere abwechselnd übereinander gestapelte keramische Schichten und Elektrodenschichten umfasst. Dabei können Elektrodenschichten bis an die Oberfläche des Grundkörpers herangeführt und jeweils mit einem Ende mit einem Außenkontakt der beschriebenen Art kontaktiert sein.

Die Elektrodenschichten können als Innenelektroden ausgeführt sein, die dazu dienen, ein elektrisches Feld, insbesondere in Zusammenhang mit einem elektrisch isolierenden Material eine Kapazität innerhalb jeder zwischen zwei benachbarten Innenelektroden liegenden keramischen Schicht aufzubauen.

Die keramischen Schichten eines elektrischen Vielschichtbauelements könnten dabei eine Kondensatorkeramik enthalten, womit unter Verwendung eines geeigneten Innenelektrodenmaterials, beispielsweise Kupfer, ein SMDfähiger keramischer Vielschichtkondensator, auch MLCC genannt, geschaffen wird. Dieser könnte beispielsweise in ein elektronisches Filter eingesetzt werden, beispielsweise zur Verarbeitung von elektrischen Signalen. Insbesondere könnte der keramische Vielschichtkondensator in ein mobiles Kommunikationsgerät eingesetzt werden, wobei die feste elektrische und mechanische Anbindung des elektrischen Vielschichtbauelements durch seinen zweischichtigen Außenkontakt mit großer Kontaktoberfläche den Vorteil hat, dass das elektrische Vielschichtbauelement bei Erschütterungen oder Stößen sich nicht von einer Leiterplatte oder anderem elektrischen Anschluss löst.

Die keramischen Schichten des elektrischen Vielschichtbauelements gemäß einer Ausführungsform enthaltend eine Varistorkeramik, womit unter Verwendung eines geeigneten Innenelektrodenmaterials, beispielsweise Kupfer, ein SMDfähiger keramischer Vielschichtvaristor angegeben wird. Dieser könnte als Vorrichtung zum Überspannungsschutz eines elektronischen Geräts eingesetzt werden.

Ein oder mehrere Außenkontakte gemäß zumindest einer in diesem Dokument beschriebenen Ausführungsform sind nicht auf Kondensatoren oder Varistoren beschränkt. Ein Außenkontakt der beschriebenen Art kann vielmehr für alle Arten von elektrischen Bauelementen verwendet werden. Unter diesen sollen beispielsweise NTC-Bauelemente, PTC-Bauelemente sowie jede Art von monolithisch aufgebauten elektrischen Bauelementen fallen, elektrische Bauelementarrays welche in einem Stück gefertigt sind beziehungsweise einen Grundkörper aufweisen und gegebenenfalls mehrere unterschiedliche Materialien, insbesondere Widerstandsmaterialien, enthalten könnten. Ein Außenkontakt der beschriebenen Art lässt sich auch zur Kontaktierung von Piezoaktoren bzw. Piezostacks, insbesondere von zwischen piezokeramischen Schichten angeordneten Innenelektroden, einsetzen.

Keramische Schichten eines elektrischen Vielschichtbauelements ergeben sich vorzugsweise aus keramischen Grünfolien, welche mit einem Binder versehen sein können, zurechtgeschnitten und anschließend gemeinsam gesintert werden, um ein monolithisches Vielschichtbauelement zu erhalten. Die keramischen Grünfolien können mit aufgedruckten Elektrodenstrukturen beziehungsweise Materialien beispielsweise mittels eines Siebdruckverfahrens versehen sein.

Die beschriebenen Gegenstände werden anhand der folgenden Ausführungsbeispiele und Figuren näher erläutert. Dabei zeigt:
- Figur 1: ein elektrischen Vielschichtbauelement mit einem mehrschichtigen Außenkontakt,
- Figur 2: eine vergrößerte Darstellung eines Teils eines elektrischen Vielschichtbauelements mit einem mehrschichtigen Außenkontakt,
- Figur 3a: ein erstes elektrisches Bauelement als Array mit mehrschichtigen Außenkontakten,
- Figur 3b: ein erstes elektrisches Bauelement als Feedthrough-Array mit mehrschichtigen Außenkontakten,
- Figur 3c: ein weiteres elektrisches Bauelement als Feedthrough-Array mit mehrschichtigen Außenkontakten,
- Figur 3d: ein elektrisches Bauelement mit einem Ball Grid Array mit halbkugelförmigen, zweischichtigen Außenkontakten,
- Figur 4a: ein Schaltdiagramm einer möglichen ersten elektrischen Verschaltung des in Figur 4a schematisch gezeigten Bauelements,
- Figur 4b: ein Schaltdiagramm einer möglichen zweiten elektrischen Verschaltung des in Figur 4a schematisch gezeigten Bauelements.

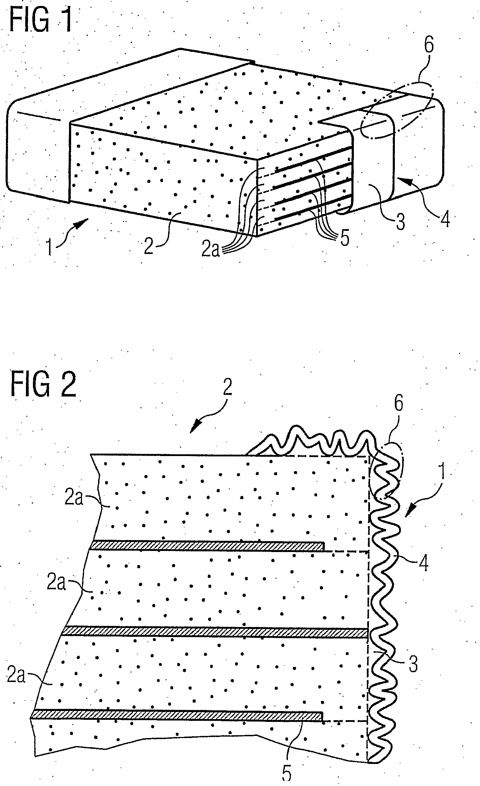

Figur 1 zeigt ein elektrisches Vielschichtbauelement 1 mit einem monolithischen, gesinterten Grundkörper 2, der ein keramisches Material, zum Beispiel eine Kondensatorkeramik oder eine Varistorkeramik, enthält. Der Grundkörper umfasst eine gestapelte Anordnung von keramischen Schichten 2a sowie Innenelektroden 5. Bei einem Satz elektrisch gleichpoliger Innenelektroden 5 ist das Ende einer jeden Innenelektrode bis an die Oberfläche des Grundkörpers 2 herangeführt und mit einer eingebrannten Elektrodenschicht 3, welche beispielsweise kupferhaltig ist, kontaktiert. Die Elektrodenschicht 3 bildet eine erste innere Schicht eines Außenkontakts 6 des Vielschichtbauelements. An der dem Grundkörper 2 abgewandten Oberfläche der inneren Elektrodenschicht 3 ist eine weitere, metallhaltige beziehungsweise edelmetallhaltige Schicht, vorzugsweise eine Pd-Ni (Nickel-Palladium) Legierungsschicht 4, galvanisch außen aufgebracht.

Der aus der inneren 3 und der äußeren Schicht 4 gebildete Außenkontakt 6 umklammert kappenförmig eine Seite des Vielschichtbauelements.

An der gegenüberliegenden Seite des Vielschichtbauelements ist ein weiterer, gegenpoliger Außenkontakt 6 aufgebracht, der mit den Enden gleichpoliger Innenelektroden 5 eines anderen Innenelektrodensatzes kontaktiert ist. Gemäß einer Ausführungsform kann auch weitere Außenkontakt gemäß einem zweischichtigen Außenkontakt der beschriebenen Art ausgeführt sein.

Figur 2 ist eine vergrößerte Darstellung eines Eckbereichs eines elektrischen Bauelements 1, welches beispielhaft als Vielschichtbauelement gezeigt ist. Es wird gezeigt, wie die erste und innere auf die Oberfläche eines Grundkörpers 2 aufgebrachte Schicht eines Außenkontakts 6 in den Oberflächenbereich des Grundkörpers eingebrannt ist und eine unregelmäßige Oberflächenstruktur aufweist, die geschlossen und porös ist. Auf diese innere Schicht 3 ist eine weitere Schicht 4 aufgebracht, die nun die äußere Oberfläche des Außenkontakts bildet. Sie wird so dünn wie möglich ausgeführt, damit eine Oberflächengröße des Außenkontakts entsprechend jener der darunter liegenden Schicht so weit wie möglich erreicht werden kann. Dabei wird die äußere Schicht 4 vorzugsweise galvanisch auf die innere Schicht aufgebracht.

Obwohl die Figuren Vielschichtbauelemente zeigen, können Außenkontakte der beschriebenen Art auf beliebige elektrische Bauelemente mit porösen Grundkörpern und/oder auf beliebige elektrische Bauelemente mit galvanisierbaren Materialbereichen beziehungsweise -schichten aufgebracht werden.

Es können mehr als zwei Materialschichten je Außenkontakt vorgesehen werden, wobei es dann darauf ankommt, dass die äußere Oberfläche des elektrischen Bauelements dennoch eine ausreichend große Oberfläche für eine feste Anbindung mit einer Montagefläche aufweist. Die Materialschichten könnten dabei Materialien je nach bevorzugten Eigenschaften enthalten. Sie können, müssen aber nicht, galvanisch auf die jeweils innere Materialschicht aufgetragen werden.

Auch können Außenkontakte der beschrieben Art an jeder Seitenfläche eines elektrischen Bauelements aufgebracht werden. Auf jeder Fläche könnten auch mehrere Außenkontakte der beschriebenen Art aufgebracht werden.

Ein quaderförmiger Grundkörper könnte mit vier oder mehr Außenkontakten versehen sein. Somit könnte das elektrische Bauelement wahlweise mit einer seiner Außenflächen mit einer Montagefläche oder einem anderen elektrischen Anschluss kontaktiert werden. Jeder Außenkontakt könnte dabei eine Elektrodenschicht kontaktieren, die den gleichen elektrischen Pol trägt, wie der Außenkontakt. Masseelektrodenschichten gelten dabei ebenfalls als Elektrodenschichten.

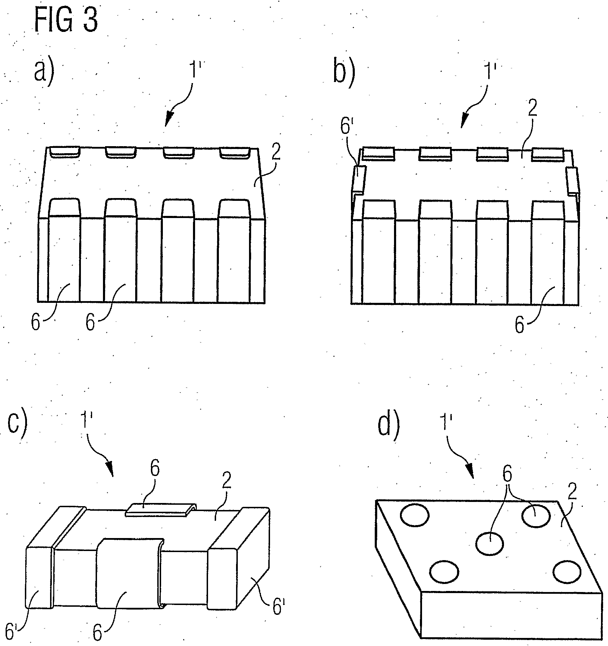

Figuren 3a bis 3d zeigen unterschiedliche elektrische Bauelemente, die mit einem beziehungsweise mit mehreren Außenkontakten 6, jeweils bestehend aus einer inneren eingebrannten Schicht 3 und einer vorzugsweise galvanisch auf die innere Schicht 3 aufgebrachten äußeren Schicht 4, versehen sind.

Figur 3a zeigt ein vorzugsweise einstückiges elektrisches Bauelement 1' welches als Array ausgeführt ist. Es werden an den längeren Seitenflächen eines quaderförmigen Grundkörpers 2 nebeneinander angeordnete Außenkontakte 6 gezeigt, welche jeweils eine innere eingebrannte metallische Schicht sowie eine äußere galvanisch aufgebrachte zweite metallische Schicht umfassen. Zwischen jeweils zwei sich gegenüberliegenden Außenkontakten 6 kann ein Stapel von abwechselnd übereinander angeordneten Innenelektroden unterschiedlichen elektrischen Pols angeordnet sein. Zwischen diesen Innenelektroden können jeweils Kapazitäten erzeugt werden. Der Grundkörper kann ein Widerstandsmaterial beziehungsweise ein elektrisch isolierendes Material wie zum Beispiel Keramik enthalten, wobei dieses Material zwischen den Innenelektroden angeordnet ist.

Das elektrische Bauelement ist nach einer Ausführungsform ein keramisches Vielschichtbauelement-Array, bei dem mehrere Vielschichtbauelemente in einem Bauelement nebeneinander angeordnet sind.

Figur 3b zeigt ein vorzugsweise einstückiges elektrisches Bauelement 1' welches als Feedthrough-Array ausgeführt ist. Es werden an vier Seitenflächen eines quaderförmigen Grundkörpers 2 nebeneinander angeordnete Außenkontakte 6 und 6' gezeigt, welche jeweils eine innere eingebrannte metallische Schicht sowie eine äußere galvanisch aufgebrachte zweite metallische Schicht umfassen. Eine Durchleitung, beispielsweise ein Widerstand oder eine Masseelektrode, kann die zwei sich gegenüberliegenden, an den Stirnflächen des quaderförmigen Grundkörpers angeordneten Außenkontakte 6' verbinden. Zwischen jeweils zwei sich gegenüberliegenden Außenkontakten 6 kann ein Stapel von abwechselnd übereinander angeordneten Innenelektroden unterschiedlichen elektrischen Pols angeordnet sein.

Figur 3c zeigt ein weiteres elektrisches Bauelement 1', das mit sich gegenüberliegenden Außenkontakten 6' und 6 der beschriebenen Zusammensetzung(en) versehen ist. Die Außenkontakte 6, 6' bilden in diesem Beispiel insgesamt vier großflächige Kontaktierungsflächen mit guten Fixierungseigenschafen zur Kontaktierung mit externen elektrischen Anschlüssen. Zwischen den Außenkontakten ist eine vorzugsweise freiliegende Grundkörperfläche 2 gezeigt. Diese kann nach je nach Bedarf auch gemäß einer jeden Ausführungsform des elektrischen Bauelements mit mehrschichtigen Außenkontakten passiviert sein. Die Passivierung könnte beispielsweise vor der Herstellung der Außenkontakte auf den Grundkörper 2 aufgebracht werden.

Figur 3d zeigt ein elektrisches Bauelement 1' welches an einer seiner Außenflächen, welche einem externen Kontakt zugewandt ist beziehungsweise mit einem externen Kontakt kontaktiert werden soll, mit teilweise kugelförmigen Außenkontakten 6 als so genanntes Ball Grid Array ausgeführt ist. Die Außenkontakte weisen eine mehrschichtige Struktur gemäß der beschriebenen Art auf und dienen daher jeweils der guten Fixierung beziehungsweise elektrischen Kontaktierung mit einem externen elektrischen Kontakt wie zum Beispiel eine Leiterplatte oder eine beziehungsweise mehrere Zuleitungen beziehungsweise Leiterbahnen.

Ein Grundkörper 2 eines jeden hier beschriebenen elektrischen Bauelements kann andere Materialien als Keramik enthalten; wichtig ist, dass die Außenkontakte 6 für das Bauelement gute Kleb- beziehungsweise Lötbarkeitseigenschaften aufweisen.

Bei den beschriebenen elektrischen Bauelementen werden vorzugsweise lediglich die Bereiche von Außenkontakten 6, 6' mehrschichtig, das heißt jeweils mit einer eingebrannten und mit einer galvanisch aufgebrachten Schicht, ausgeführt, die einem externen elektrischen Anschluss, wie zum Beispiel eine Montagefläche, eine Leiterplatte oder ein Außenanschluss wie zum Beispiel eine Zuleitung, zugewandt sind beziehungsweise mit ihr/ihm kontaktiert/zusammengelötet werden. Diese Bereiche der Außenkontakte 6, 6' weisen eine möglichst große Oberfläche auf, um eine gute Fixierung mit dem externen elektrischen Anschluss zu ermöglichen.

Aus herstellungstechnischen Gesichtspunkten kann es günstig sein, wenn das gesamte Bauelement in ein Galvanikbad eingetaucht wird und dort die bereits eingebrannten Bereiche beziehungsweise Teile der Außenkontakte galvanisiert werden, sodass die Außenkontakte über ihre gesamte Außenfläche mit einer Galvanikschicht versehen sind.

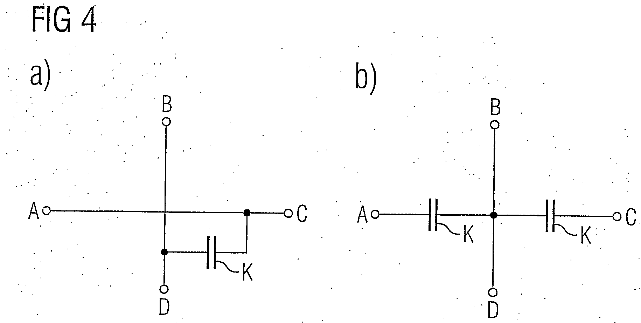

Figuren 4a und 4b zeigen Verschaltungsmöglichkeiten eines elektrischen Bauelements mit gemäß diesem Dokument beschriebenen, mehrschichtigen Außenkontakten.

Figur 4a zeigt ein Schaltdiagramm einer möglichen ersten elektrischen Verschaltung eines anhand dieses Dokuments beschriebenen elektrischen Bauelements, zum Beispiel eines oberflächenmontierbaren Kondensators, wobei sich gegenüberliegende, gleichpolige Außenkontakte A und C des Bauelements einerseits und sich gegenüberliegende, gleichpolige Außenkontakte B und D des Bauelements andererseits elektrisch miteinander verbunden sind und zwischen ihnen eine Kapazität K beziehungsweise ein Kondensator angeordnet ist. Das könnte beispielsweise dadurch realisiert werden, dass eine elektrisch leitende Bahn beziehungsweise eine Innenelektrode sich gegenüberliegende Außenkontakte A und C sowie eine weitere elektrisch leitende Bahn beziehungsweise Innenelektrode andere sich gegenüberliegende Außenkontakte B und D miteinander verbindet. Ein Dielektrikum zwischen diesen leitenden Bahnen, vorzugsweise in der Form einer dielektrischen Schicht, erzeugt dann die genannte Kapazität K. Es wird somit ein so genannter Durchführungskondensator geschaffen.

Figur 4b zeigt ein Schaltdiagramm einer möglichen ersten elektrischen Verschaltung eines anhand dieses Dokuments beschriebenen elektrischen Bauelements, zum Beispiel eines oberflächenmontierbaren Kondensators, wobei sich gegenüberliegende, gleichpolige Außenkontakte A und C des Bauelements jeweils mit einer Innenelektrode beziehungsweise jeweils mit einem Stapel von Innenelektroden verbunden sind und die mit unterschiedlichen Außenkontakten verbundenen Innenelektroden mittels eines dielektrischen Spalts voneinander getrennt sind. Zwischen den Außenkontakten B und D könnte eine durchgehende elektrische leitende Bahn beziehungsweise Innenelektrode verlaufen und sie miteinander elektrisch verbinden. Die durch den Spalt und den angrenzenden elektrisch geladenen Flächen erzeugte Kapazität bildet in Bezug auf die elektrisch leitende Bahn zwischen den anderen sich gegenüberliegenden Außenkontakten B und D des Bauelements ein gemeinsames Kapazitätspaar beziehungsweise eine so genannte Matched Pair Kapazitätsanordnung oder einen so genannten Common Ground Kondensator, wenn es eine Masseleitung ist, die die Außenkontakte B und D miteinander verbindet.

### Bezugszeichenliste

- 1: elektrisches Bauelement
- 2: keramischer Grundkörper
- 2a: keramische Schichten
- 3: innere Schicht eines Außenkontakts
- 4: äußere Schicht eines Außenkontakts
- 5: Elektrodenschichten
- 6: Außenkontakt
- 6': weiterer Außenkontakt

- A: erster Außenkontakt
- B: zweiter Außenkontakt
- C: dritter, dem ersten Außenkontakt gegenüberliegender Außenkontakt
- D: vierter, dem zweiten Außenkontakt gegenüberliegender Außenkontakt
- K: Kapazität

## Patentansprüche

1. Elektrisches Bauelement mit einem Grundkörper (2), wobei
- eine Oberfläche des Grundkörpers mit zumindest einer ersten elektrisch leitfähigen Materialschicht (3) versehen ist, wobei die erste Materialschicht (3) in den Grundkörper (2) eingebrannt ist und die Dicke der ersten Materialschicht im Bereich von 0,5 bis 5µm liegt,
- die erste Materialschicht auf ihrer dem Grundkörper abgewandten Oberfläche mit einer weiteren elektrisch leitfähigen Materialschicht (4) beschichtet ist, wobei
- die Materialschichten zumindest einen Teil eines Außenkontakts (6, 6') bilden, der eine geschlossene, poröse, äußere Oberfläche aufweist und wobei die weitere Materialschicht (4) eine Pd-Ni-Legierung enthält und auf die erste Materialschicht (3) galvanisch aufgebracht ist.

2. Elektrisches Bauelement nach Anspruch 1, bei dem die erste Materialschicht (3) ein galvanisierbares Material enthält.

3. Elektrisches Bauelement nach einem der vorhergehenden Ansprüche, bei dem die erste Materialschicht (3) Kupfer enthält.

4. Elektrisches Bauelement nach einem der vorhergehenden Ansprüche, bei dem sich die Porosität des Außenkontakts (6,6') durch die Form der ersten Materialschicht (3) ergibt.

5. Elektrisches Bauelement nach einem der vorhergehenden Ansprüche, bei dem die weitere Materialschicht (4) ein leitklebefähiges Material enthält.

6. Elektrisches Bauelement nach einem der vorhergehenden Ansprüche, bei dem die weitere Materialschicht (4) ein Material enthält, welches die erste Materialschicht (3) vor Oxidation schützt.

7. Elektrisches Bauelement nach einem der vorhergehenden Ansprüche, das ein oberflächenmontierbares Bauelement ist.

8. Elektrisches Bauelement nach einem der vorhergehenden Ansprüche, bei dem der Grundkörper (2) eine Kondensatorkeramik enthält.

9. Elektrisches Bauelement nach einem der vorhergehenden Ansprüche, bei dem der Grundkörper (2) eine Varistorkeramik enthält.

10. Elektrisches Bauelement nach einem der vorhergehenden Ansprüche, das ein elektrisches Vielschichtbauelement ist, wobei der Grundkörper (2) mehrere übereinander gestapelte keramische Schichten (2a) und Elektrodenschichten (5) umfasst.

11. Elektrisches Bauelement nach Anspruch 10,
bei dem die Elektrodenschichten (5) mindestens eines der folgenden Materialien enthalten: Nickel, Kupfer, Palladium.

12. Elektrisches Bauelement nach einem der vorhergehenden Ansprüche, das ein durch Sintern hergestelltes monolithisches Bauelement ist.

13. Elektrisches Bauelement nach einem der Ansprüche 10 bis 12, das mehrere Außenkontakte (6, 6') aufweist, die jeweils mit ihren inneren Schichten (3) Enden der Elektrodenschichten (2) kontaktieren.

## Claims

1. Electrical component comprising a base body (2), wherein
- a surface of the base body is provided with at least a first electrically conductive material layer (3), wherein the first material layer (3) is fired into the base body (2) and the thickness of the first material layer lies in the range of 0.5 to 5 µm,
- that surface of the first material layer which is remote from the base body is coated with a further electrically conductive material layer (4), wherein
- the material layers form at least part of an external contact (6, 6'), which has a closed, porous external surface, and wherein the further material layer (4) contains a Pd-Ni alloy and is applied to the first material layer (3) by electroplating.

2. Electrical component according to Claim 1, wherein the first material layer (3) contains an electroplatable material.

3. Electrical component according to either of the preceding claims, wherein the first material layer (3) contains copper.

4. Electrical component according to any one of the preceding claims, wherein the porosity of the external contact (6, 6') is given by the shape of the first material layer (3).

5. Electrical component according to any one of the preceding claims, wherein the further material layer (4) contains a material with conductive adhesive properties.

6. Electrical component according to any one of the preceding claims, wherein the further material layer (4) contains a material which protects the first material layer (3) from oxidation.

7. Electrical component according to any one of the preceding claims, which is a surface-mountable component.

8. Electrical component according to any one of the preceding claims, wherein the base body (2) contains a capacitor ceramic.

9. Electrical component according to any one of the preceding claims, wherein the base body (2) contains a varistor ceramic.

10. Electrical component according to any one of the preceding claims, which is an electrical multi-layer component, wherein the base body (2) comprises a plurality of ceramic layers (2a) and electrode layers (5) stacked one on top of another.

11. Electrical component according to Claim 10, wherein the electrode layers (5) contain at least one of the following materials: nickel, copper, palladium.

12. Electrical component according to any one of the preceding claims, which is a monolithic component produced by sintering.

13. Electrical component according to any one of Claims 10 to 12, which comprises a plurality of external contacts (6, 6') which respectively contact ends of the electrode layers (2) with their inner layers (3).

## Revendications

1. Composant électrique pourvu d'un corps de base (2), dans lequel
- une surface du corps de base est pourvue d'au moins une première couche de matériau (3) électriquement conductrice, dans lequel la première couche de matériau (3) est cuite dans le corps de base (2) et l'épaisseur de la première couche de matériau se situe dans la plage de 0,5 à 5 Dm,
- la première couche de matériau est revêtue sur sa surface opposée au corps de base, d'une autre couche de matériau (4) électriquement conductrice, dans lequel
- les couches de matériau constituent au moins une partie d'un contact extérieur (6, 6') qui présente une surface extérieure poreuse et fermée et dans lequel l'autre couche de matériau (4) contient un alliage de Pd-Ni et est déposée de manière galvanique sur la première couche de matériau (3).

2. Composant électrique selon la revendication 1, dans lequel la première couche de matériau (3) contient un matériau pouvant être galvanisé.

3. Composant électrique selon l'une quelconque des revendications précédentes, dans lequel la première couche de matériau (3) contient du cuivre.

4. Composant électrique selon l'une quelconque des revendications précédentes, dans lequel la porosité du contact extérieur (6, 6') apparaît sous la forme de la première couche de matériau (3).

5. Composant électrique selon l'une quelconque des revendications précédentes, dans lequel l'autre couche de matériau (4) contient un matériau adhésif conducteur.

6. Composant électrique selon l'une quelconque des revendications précédentes, dans lequel l'autre couche de matériau (4) contient un matériau qui protège la première couche de matériau (3) de l'oxydation.

7. Composant électrique selon l'une quelconque des revendications précédentes, **caractérisé en ce qu'**il s'agit d'un composant pouvant être monté en surface.

8. Composant électrique selon l'une quelconque des revendications précédentes, dans lequel le corps de base (2) contient une céramique de condensateur.

9. Composant électrique selon l'une quelconque des revendications précédentes, dans lequel le corps de base (2) contient une céramique de varistance.

10. Composant électrique selon l'une quelconque des revendications précédentes, **caractérisé en ce qu'**il s'agit d'un composant multicouche électrique, dans lequel le corps de base (2) comprend une pluralité de couches céramiques (2a) et de couches d'électrodes (5) empilées les unes sur les autres.

11. Composant électrique selon la revendication 10, dans lequel les couches d'électrodes (1) contiennent au moins l'un des matériaux suivants :
nickel, cuivre, palladium.

12. Composant électrique selon l'une quelconque des revendications précédentes, **caractérisé en ce qu'**il s'agit d'un composant monolithique fabriqué par frittage.

13. Composant électrique selon l'une quelconque des revendications 10 à 12, comportant une pluralité de contacts extérieurs (6, 6') qui viennent respectivement en contact par leurs couches internes (3) avec des extrémités des couches d'électrodes (2).
